# EUROPÄISCHE PATENTANMELDUNG

(11) **EP 0 588 108 A2**
(43) Veröffentlichungstag der Anmeldung: **23.03.1994**
(21) Anmeldenummer: 93113440.7
(22) Anmeldetag: 23.08.1993
(51) Int. Cl.: G05B 19/417

(54) **Anordnung für die Bedienung einer rechnergesteuerten Fertigungseinrichtung**

(30) Priorität: 24.08.1992 DE 4228075; 24.11.1992 DE 4239446
(71) Anmelder: Gildemeister AG, D-33689 Bielefeld (DE)
(72) Erfinder: Langmann, Reinhard, Prof. Dr.-Ing., D-42569 Solingen (DE); Freitag, Mathias Dipl-Ing., D-30659 Hannover (DE)
(74) Vertreter: Schmidt-Evers, Jürgen, Dipl.-Ing.

(57) **Zusammenfassung**

Eine Bedienanordnung einer rechnergesteuerten Fertigungseinrichtung mit einem Bediengerät (B) hat für die Dialogbehandlung ein Modul für die Dialogsteuerung und ein Dialogpräsentationsmodul, für die Prozeßvisualisierung ein Modul für die Manipulation von Prozeßvariablen und ein Präsentationsmodul für Prozeßvariable, wobei der Präsentationsmodul für Prozeßvariable sowie der Dialogpräsentationsmodul einen bediengeräteabhängigen Präsentationsmodul (1) und der Modul für die Manipulation von Prozeßvariablen und der Modul für die Dialogsteuerung einen bediengeräteunabhängigen Modul für die Steuerung des Bedienablaufs (2) bilden und der Präsentationsmodul (1) und der Modul für die Steuerung des Bedienablaufs (2) in Reihe zwischen dem Bediengerät und einer Steuerung (S) der Fertigungseinrichtung liegen. Der Präsentationsmodul(1) ist mit einer Ressource zur Dialogpräsentation (3) und mit einer Ressource für die Präsentation von Prozeßvariablen (4) und der Modul für die Steuerung des Bedienablaufs ist mit einer Ressorce für den Dialogablauf (5) und mit einer Ressource zu Manipulation von Prozeßvariablen (6) verbunden. Damit ist eine projektierbare Bedienanordnung realisierbar, die bezüglich des Dialogs und der Prozeßvisualisierung problemangepaßt verändert werden kann und keine Eingriffe in die innere Struktur der Steuermodule erfordert.

## Beschreibung

Die Erfindung betrifft eine Anordnung für die Bedienung einer rechnergesteuerten Fertigungseinrichtung.

Im Maschinenbau geht der Trend zu kürzeren Lieferzeiten, steigender Variantenvielfalt und abnehmender Losgröße der Aufträge, die gleichwohl ökonomisch und termingerecht bearbeitet werden müssen. Damit steigen die Anforderungen an Organisation und Technik, an die Qualität und Flexibilität des Personals sowie an die Produktivität. Die Bewältigung der Probleme ist nur mit rechnergesteuerten Fertigungseinrichtungen möglich, die an das kundenspezifische technologische und produktionstechnische Anforderungsprofil (offene Systeme) anpaßbar sein müssen, eine hohe Qualität der Prozeß- und Technologiebeherrschung verlangen und für deren Bedienung eine hohe Kompetenz und Autonomie des Personals erforderlich ist.

Große Bedeutung haben in diesem Zusammenhang leistungsfähige Mensch-Maschine-Schnittstellen. Beispielsweise können Bedienanordnungen für prozeßorientierte Dialogtechniken und eine graphische Visualisierung dynamischer Prozesse nicht nur zur Erreichung der Ziele, sondern auch zur menschengerechten Arbeitsplatzgestaltung beitragen.

Bedienanordnungen für rechnergesteuerte Fertigungseinrichtungen, wie z. B. Fertigungszellen oder numerisch gesteuerte Werkzeugmaschinen enthalten üblicherweise ein Bediengerät sowie Steuermodule zur Ansteuerung des Bediengerätes. Die Steuermodule können in Form von elektronischen Schaltungsanordnungen oder in Form von Rechnerprogrammen realisiert sein. Der Ausdruck "Modul" wird hier äquivalent zu "Einheit" oder "Komponente" in Verbindung mit der entsprechenden Funktion gebraucht.

Aus dem Bereich der Mensch-Computer-Schnittstelle ist bekannt, die Steuermodule für ein Bediengerät in einen Modul, der ausschließlich die Darstellung oder Präsentation des Dialogs zwischen einem Bediener und einem Computer übernimmt, und in einen Modul zu teilen, der für die Steuerung des Dialogablaufs verantwortlich ist. Dies ist z.B. am Seeheim-Modell einer Nutzerschnittstelle in M. Green: "Report on Dialog Specification Tools", Computer Graphics Forum, Vol. 3, pp. 305 - 313, 1984 beschrieben. Es ist weiterhin bekannt, daß über eine Dialogressource, die häufig als Textdatei ausgeführt ist, die Dialogpräsentation und der Dialogablauf für eine konkrete Bedienerschnittstelle projektiert werden können. Bei dieser Lösung ist eine dynamische Visualisierung von Prozeßvariablen, d. h. eine Prozeßvisualisierung nicht vorgesehen. Unter dem für graphische Anwendungen häufig verwendeten Begriff "Ressource" sind Daten einer gespeicherten Datenbasis zu verstehen, auf die während des Ablaufs einer Anwendung zugegriffen werden kann. Der jeweils beigefügte Begriff, z. B. Dialog(ressource) kennzeichnet die genauere Ausgestaltung des entsprechenden Ressourceninhalts.

Hinsichtlich der im Stand der Technik nicht durchgängig einheitlich verwendeten Begriffe seien weiterhin folgende Veröffentlichungen erwähnt:
Trefz, B.; Ziegler, J.: DIAMANT - Ein User Interface Management System für graphische Benutzerschnittstellen,
in: Maaß, S.; Oberquelle, H. (Hrsg): Software-Ergonomie '89,
B. G. Teubner Verlag, Stuttgart, 1989, S.264 - 273,
Raether, C.: Entwicklungswerkzeuge für grafische Benutzungsoberflächen, miniMicro magazin, 7-8/1992, S. 68 - 71
Schragl, R.: Dialogsteuerungen von Arbeitsplatzanwendungen, unix/mail, 9(1991)3, S. 172 - 176.

Zunehmend besteht die Forderung, daß für rechnergesteuerte Fertigungseinrichtungen neben den Dialogen mit dem Bediener auch Prozeßabläufe, wie beispielsweise Bearbeitungsvorgänge am Bediengerät visualisiert werden sollen. Aus der DE-OS 37 07 579 ist ein Verfahren für die graphisch-dynamische Visualisierung von Bearbeitungsvorgängen an numerisch gesteuerten Werkzeugmaschinen bekannt, bei dem eine Projektierbarkeit dieser Prozeßvisualisierung allerdings nicht vorgesehen ist. Derartige Systeme beinhalten außerdem keine Möglichkeiten, erforderliche Dialoge zu projektieren.

Projektierbare Prozeßvisualisierungssysteme sind im Bereich der Anlagenautomatisierung aus der Veröffentlichung W. Schuster: "Modernes Mensch-Maschine-Konzept unter MS Windows 3.0", Sonderdruck aus elektro anzeiger, 43. Jahrgang, Nr. 9/90 bekannt geworden. Die zugehörigen Steuermodule besitzen jedoch nur gering ausgeprägte Dialogfähigkeiten. Zudem scheitert der Einsatz in rechnergesteuerten Fertigungseinrichtungen meist auch an der in Fertigungseinrichtungen begrenzten Rechnerleistung und deren eingeschränkten graphischen Fähigkeiten.

Aus einer Firmenschrift der Firma iXOS: "iXMove/iXBuild", 1992 ist eine Bedienanordnung bekannt, die sowohl ein Steuermodul für die Dialoggestaltung bzw. Dialogbehandlung als auch ein Steuermodul für die Prozeßvisualisierung beinhaltet. Als Grundlage für die Anwendung dieser Bedienanordnung werden die bekannten Softwaresysteme UNIX, X-Windows und OSF/Motif benötigt.

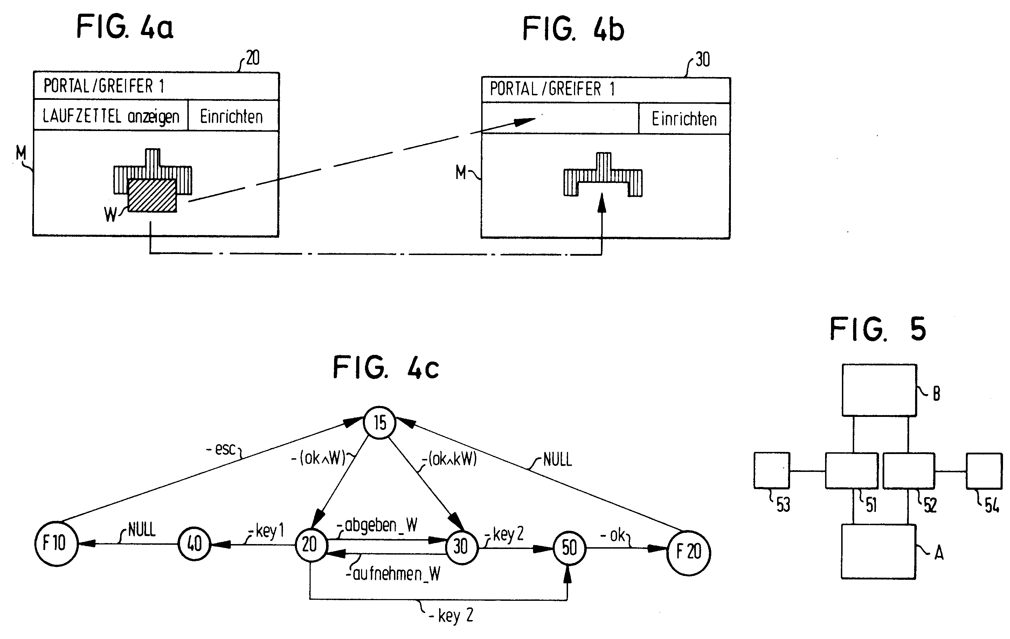

Eine derartige Struktur der Bedienanordnung zeigt Fig. 5. Ein Steuermodul 51 für die Prozeßvisualisierung mit zugehöriger Projektierressource 52 ist parallel zu einem Steuermodul 53 für den Dialog mit zugehöriger Projektierressource 54 zwischen einem Anwendungssystem A und einem Bediengerät B vorgesehen. Abgesehen davon, daß die erforderlichen Softwaresysteme in rechnergesteuerten Fertigungseinrichtungen wie den beschriebenen Fertigungszellen oder numerisch gesteuerten Werkzeugmaschinen aus Kostengründen nicht zur Verfügung stehen, besitzt die Anordnung nach Figur 5 die Nachteile, daß für Dialoge der Dialogablauf und die Dialogpräsentation nicht getrennt projektiert werden können und daß die Steuermodule nur für bestimmte vorgegebene Bediengeräte, beispielsweise mit X-Windows-Fähigkeiten ausgelegt sind.

Der letztgenannte Nachteil trifft prinzipiell für alle bekannten Bedienanordnungen zu. Der Anschluß technisch unterschiedlicher Geräte wie Farbmonitore, Maschinen-Handterminals oder Remote-Rechnern erfordert deshalb jeweils eine vollkommen neue Strukturierung aller Steuermodule.

Der Erfindung liegt die Aufgabe zugrunde, eine Bedienanordnung für Fertigungseinrichtungen mit projektierbarer Bedienerschnittstelle anzugeben, d.h. eine Bedienanordnung mit einer bezüglich des Dialogs und der Prozeßvisualisierung problemanpaßbaren Veränderbarkeit der Bedienerschnittstelle, die keine Eingriffe in die innere Struktur der Steuermodule erfordert.

Diese Aufgabe wird mit den Merkmalen des Patentanspruchs 1 gelöst.

Die Erfindung hat den Vorteil, daß die konkreten Bedienoberflächen für rechnergesteuerte Fertigungseinrichtungen vollständig, kundenspezifisch und über einfache textuelle Dateien projektierbar sind und daß für die Anpassung der Bedienoberflächen an neue und technisch unterschiedliche Bediengeräte nur geringfügige Änderungen, z. B. das Hinzufügen und/oder das Austauschen eines Präsentationsmoduls durchgeführt werden müssen.

Ausgestaltungen der Erfindung sind in Unteransprüchen gekennzeichnet.

Die Erfindung wird nachfolgend anhand von Figuren der Zeichnung näher erläutert. Es zeigen:
Figur 1 ein Blockschaltbild einer erfindungsgemäßen Bedienanordnung für ein angeschlossenes Bediengerät,
Figur 2 ein Blockschaltbild einer erfindungsgemäßen Bedienanordnung für mehrere verschiedene angeschlossene Bediengeräte,
Figur 3 eine Darstellung eines Prozeßdialogs mit Bediensubnetz,
Figur 4 einen Prozeßdialog für adaptives Verhalten mit zugehörigem Bediensubnetz und
Figur 5 eine Darstellung einer bekannten Mensch-Maschine-Schnittstelle.

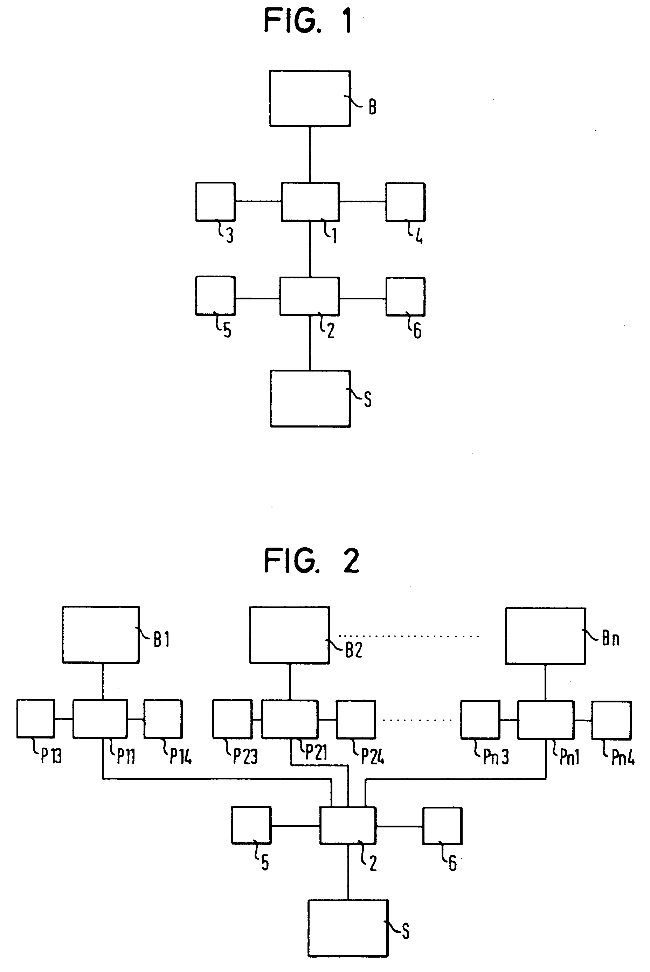

In Figur 1 ist an die rechnergesteuerte Fertigungseinrichtung ein Bediengerät B über Steuermodule 1 und 2 angeschlossen. Zwischen dem Bediengerät B und der Steuerung S der Fertigungseinrichtung liegen ein Präsentationsmodul 1 und ein Modul für die Steuerung des Bedienablaufs 2 in Reihe. Beide Module sind durch eine Schnittstelle gekoppelt.

Der Präsentationsmodul 1 dient zur Visualisierung der Dialoge und Prozeßabläufe, z.B. der Bearbeitungsvorgänge in einer Fertigungszelle auf dem Bediengerät. Der Präsentationsmodul 1 ist bediengeräteabhängig und wird aus einem Präsentationsmodul für Prozeßvariable und einem Dialogpräsentationsmodul gebildet. Über eine Ressource zur Dialogpräsentation 3 wird beispielsweise das Aussehen der Dialogboxen und der Menüs sowie die Farbgebung und der darzustellende Text festgelegt. Die Art der Darstellung der Prozeßvariablen auf dem Bediengerät, z.B. mittels dynamischer Graphiken, Balkendiagrammen, Farbumschaltungen oder Blinken wird durch eine Ressource für die Präsentation von Prozeßvariablen 4 festgelegt. Die Ressourcen 3 und 4 können über Textdateien, z. B. mittels Texteditoren projektiert werden.

Anstelle des Begriffs "Dialogpräsentationsmodul" ist auch die Bezeichnung Modul/Komponente für die Dialogpräsentation/Dialogdarstellungsschicht verwendbar.

Die graphischen Fähigkeiten unterschiedlicher Bediengeräte können sehr unterschiedlich sein. So besitzt ein in einer Drehzelle eingesetztes Maschinen-Handterminal nur eine Auflösung von 240 x 64 Punkten in Schwarz/Weiß-Darstellung, während ein Farbterminal beispielsweise eine Auflösung von 640 x 480 Punkten haben kann. Deshalb muß das Präsentationsmodul auf das entsprechende Bediengerät abgestimmt sein. Die Präsentationsressourcen 3 und 4 müssen allerdings in ihrer Struktur nicht geändert werden, da sie für unterschiedliche Bediengeräte in den zugehörigen Präsentationsmodulen nur unterschiedlich interpretiert werden.

Der Modul für die Steuerung des Bedienablaufs 2, auch als Bedienstrukturmodul bezeichnet, ist für den inneren Aufbau der Bedienoberfläche verantwortlich. Der Modul für die Steuerung des Bedienablaufs 2 ist bediengeräteunabhängig und wird aus einem Modul für die Manipulation von Prozeßvariablen und einem Modul für die Dialogsteuerung gebildet. Dazu realisiert der Modul die Funktionen
-- Steuerung des Dialogablaufs in Abhängigkeit von benutzer- und prozeßinitiierten Ereignissen,
-- Zuordnung der zu visualisierenden Prozeßvariablen zu benutzer- und prozeßinitiierten Ereignissen und
-- Aktualisierung der Wertebelegungen der zu aktualisierenden Prozeßvariablen.

Die konkreten Ausprägungen dieser Funktionen werden über zwei Strukturressourcen 5 und 6 festgelegt. Diese Ressourcen können beispielsweise aus Textdateien bestehen, in denen die konkreten Ausprägungen mit vorgeschriebener Syntax und Semantik beschrieben sind.

Im Ausführungsbeispiel ist in einer Ressource für den Dialogablauf 5 (Dialogstrukturressource) die Bedienstruktur in Form eines Bediennetzes abgelegt, in dem die Knoten die aktuellen Bediensituationen über Referenzen auf die anderen Ressourcen 3 und 4 kennzeichnen. Der Modul für die Steuerung des Bedienablaufs 2 kann das Bediennetz interpretieren und damit den Dialogablauf steuern.

Eine Ressource zur Manipulation von Prozeßvariablen 6 beinhaltet eine textuelle Zuordnung zwischen den zu visualisierenden Prozeßvariablen und den zugehörigen Aktualisierungsfunktionen in der Steuerung S. Die Ressourcen 5 und 6 können ebenfalls über Textdateien, z. B. mittels Texteditoren projektiert werden.

Anstelle des Begriffs "Modul für die Dialogsteuerung" sind auch die Bezeichnungen Dialogstrukturmodul, Dialogablaufsteuerung, Dialogkontrolle, Modul zur Handhabung von Dialogereigneissen und Dialogereignisfolgen möglich. Entsprechende Hardware- oder Software-Strukturen sind im Rechner vorgesehen.

In ähnlicher Weise wie sich die Dialogsteuerung und Dialogpräsentation auf den Dialog beziehen, beziehen sich die Begriffe "Modul für die Manipulation von Prozeßvariablen" und "Präsentationsmodul für Prozeßvariable" auf den technischen Prozeß, für den die betreffende Benutzerschnittstelle benötigt wird. Der technische Prozeß selbst wird in der Benutzerschnittstelle üblicherweise ausschließlich über eine bestimmte Anzahl von Prozeßvariablen repräsentiert, welche zusammen mit der Art ihrer Aktualisierung die "Sichtweise" der Benutzerschnittstelle auf den technischen Prozeß bestimmen. Die graphische Darstellung der Prozeßvariablen wird als Prozeßvisualisierung bezeichnet.

Der Präsentationsmodul für Prozeßvariable, auch als Prozeßpräsentationsmodul bezeichnet, verarbeitet die in der Prozeßpräsentationsressource (Ressource für die Präsentation von Prozeßvariablen) festgelegte Art der Darstellung von Prozeßvariablen z. B. auf einem Bildschirm. Ähnlich verarbeitet der Modul für die Manipulation von Prozeßvariablen (Prozeßstrukturmodul) die in der Ressource für die Manipulation von Prozeßvariablen (Prozeßstrukturressource) gespeicherte Zuordnung zwischen Prozeßvariablen und deren Manipulationen, z. B. die Aktualisierung.

Der Dialogpräsentationsmodul und der Modul für die Dialogsteuerung dienen demnach zur Dialogbehandlung, während der Modul für die Manipulation von Prozeßvariablen und der Präsentationsmodul für Prozeßvariable demnach zur Prozeßvisualisierung dienen.

Figur 2 zeigt ein Blockschaltbild eines Ausführungsbeispiels einer erfindungsgemäßen Bedienanordnung, bei dem mehrere technisch unterschiedliche Bediengeräte B1, B2, ...Bn angeschlossen sind. Für alle diese Bediengeräte kann ein Modul für die Steuerung des Bedienablaufs 2 mit denselben Strukturressourcen 5 und 6 verwendet werden.

Alle Steuermodule können als separate Prozesse eines Echtzeitbetriebssystems realisiert werden.

Am Beispiel einer Drehzelle soll die Erfindung konkretisiert werden. Dabei ist für die projektierten Benutzerschnittstellen eine Objektorientierung mit graphisch-dynamischer Prozeßvisualisierung vorgesehen. Die Zelle selbst und ihre Funktion wird durch eine Anzahl realer Objekte, zum Beispiel CNC-Werkzeugmaschine, Portalroboter, Laufzettel, und deren Funktionen, zum Beispiel "Programm starten/stoppen", "Positionieren", "Greifen'', "Löschen" oder "Drucken", charakterisiert. Die Objekte verhalten sich dynamisch (Bewegung, Werkstückanwesenheit, verschiedene Einträge), bilden in der Regel eine Objekthierarchie (Grundaufbau, Spindel, Reitstock), und ihr Verhalten ist über die Objektfunktionen beeinflußbar.

Die Objekte mit ihrer Dynamik werden dem Bediener als graphisch-dynamische Abbilder an der Systemoberfläche angeboten. Der Bediener kann die graphischen Objekte selektieren und dann mittels Funktionsdialogen, die unmittelbar an die Objekte gekoppelt sind, das Verhalten der Objekte zum Beispiel durch einen tastengesteuerten Cursor beeinflussen.Alle Objekte sind dynamisch visualisierbar, d. h. der angezeigte Zustand stellt den aktuellen Arbeits- und Belegungszustand dar.

Für die Projektierung der Benutzeroberfläche und damit für ihre Visualisierung sind Werkzeuge erforderlich, die eine Reihe von Aufgaben lösen können müssen. Dazu gehören u.a.: Konstruktion statischer und dynamischer Bildobjekte (Ressource 3), Verknüpfung statischer Bildobjekte mit dynamischen über Prozeßvariable (Ressource 4), Festlegung von Dialogmasken (Ressource 3), Verknüpfung der Dialoge mit den graphisch-dynamischen Bildobjekten (Ressource 5), Anbindung von Prozeßfunktionen an die Objekte (Ressource 5) und Aufbau von Kontrollstrukturen für das Gesamtsystem (Ressource 5).

Grundlage der Projektierung ist die Modellierung der Benutzeroberfläche über prozeßaktive Bedienobjekte in der Ressource 5, wobei als Bedienobjekt eine in Struktur und Gestaltung definierte Einheit der Mensch-Maschine-Schnittstelle bezeichnet wird. Die Strukturierung der Benutzeroberfläche in kleine und überschaubare Bausteine ermöglicht einerseits die Projektierung der Bausteine selbst und andererseits die beherrschbare Verknüpfung aller Bausteine zu einem Gesamtsystem. Bedienobjekte sind prozeßaktiv, weil sie sowohl die Elemente der Mensch-Maschine-Schnittstelle beinhalten, die den Anwendungsprozeß beeinflussen, als auch die Elemente, die den Anwendungsprozeß an der Benutzeroberfläche präsentieren.

Ein Bedienobjekt besteht aus einer Identifikation, aus Verzweigungsbedingungen zu anderen Objekten und aus einer Anzahl von Attributen. Die Attribute beinhalten Referenzen auf die projektierbaren Ressourcen 3, 4 und 6 für die einzelnen Teile eines Bedienobjekts.

Die Verzweigungsbedingungen steuern das Manövrieren zu Folgeobjekten. Sie beinhalten Manövriercodes und das durch diesen Code zu aktivierende Folgeobjekt. Die Manövriercodes können sowohl durch den Bediener als auch durch den Anwendungsprozeß erzeugt werden.

Unterschieden werden zwei Typen von Bedienobjekten: sichtbare Bedienobjekte enthalten nur Präsentationsinformationen für den Bediener, wogegen über ausführbare Bedienobjekte die jeweiligen Anwendungsfunktionen angesprochen werden.

Die Modellierung einer kompletten Benutzeroberfläche erfolgt durch die Verknüpfung einer Anzähl von Bedienobjekten in Form eines Netzes in der Ressource 5. In diesem Bediennetz ist immer das Bedienobjekt aktiv, das den aktuellen Zustand der Benutzeroberfläche präsentiert. Innerhalb eines Bediennetzes werden die Objekte durch Manövrieren oder durch direkte Einsprünge in eine Bedienobjekt aktiviert oder verlassen. Im System können folgende Prozesse Manövriercodes erzeugen: Bedienereingaben, Anwendungsprozesse, zum Beispiel Prozeßabfragen, oder systeminterne Prozesse, zum Beispiel Kontrollen.

Im normalen Betrieb der Drehzelle erfolgt bei der Bedienung ein Manövrieren im Bediennetz von Objekt zu Objekt. Es ist auch möglich, daß bestimmte Zustände der Drehzelle wie Störungen, Alarme, nicht determinierte Belegungen zusätzliche Dialoge oder ergänzende Prozeßvisualisierungen generieren können. Dazu werden vom Anwendungsprozeß erzeugte direkte Einsprünge in beliebige Bedienobjekte zugelassen.

Die Gestaltung der konkreten Benutzeroberfläche mit einem einheitlichen Bediennetz oder mit funktionsspezifischen Teilnetzen ist aufgrund der Projektierbarkeit weitestgehend variabel.

Die Bediennetze sind je nach projektierter Struktur in der Lage, ein unterschiedliches Verhalten der Benutzeroberfläche zu modellieren. Bei der Betrachtung des Aktivierens oder Deaktivierens eines Bedienobjektes oder eines Subnetzes entweder durch den Bediener oder durch den Prozeß ergibt sich ein unterschiedliches Verhalten der Benutzeroberfläche.

Man erhält einen normalen Dialog, wenn eine Aktivierung oder Deaktivierung der Bedienobjekte ausschließlich durch den Systembenutzer über entsprechende Eingaben erfolgt. Auch die Prozeßvisualisierung läßt sich grundsätzlich vollständig über Bedienobjekte abbilden. Aus Gründen einer schnelleren Verarbeitungsgeschwindigkeit ist es allerdings vorteilhaft, Teile der Prozeßvisualisierung über die Bedienobjekte projektierbar zu gestalten, zum Beispiel die Zuordnung der Prozeßvariablen und dynamischen Bildelemente zu den Bedienobjekten. Die Aktualisierung der dynamischen Bildelemente kann ein separater Modul übernehmen.

Bei einer flexiblen Drehzelle ist ein Verhalten der Benutzeroberfläche vorteilhaft, das zum einen von der Zellensteuerung selbst initiierte Dialoge (Prozeßdialoge) und zum anderen prozeßgeführte Veränderungen der Dialoge (adaptives Verhalten) beinhaltet.

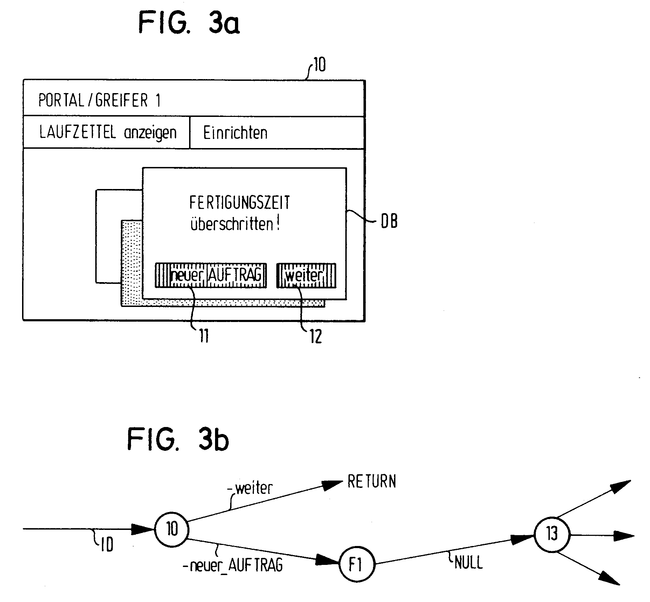

Figur 3a zeigt eine Darstellung nach Aktivierung eines einfachen Prozeßdialogs und Figur 3b das zugehörige Bediensubnetz. Das sichtbare Bedienobjekt 10 beinhaltet die neue Dialogbox DB mit zwei Knöpfen bzw. Schaltflächen "neuer Auftrag" 11 und "weiter" 12. Die Aktivierung dieses Objekts erfolgt durch die Zellensteuerung über einen direkten Einsprung mittels der Objekt-Identifikation ID. Die beiden Schaltflächen 11 und 12 erzeugen bei Betätigung Manövriercodes, über die entsprechend dem projektierten Bediennetz in ein Folgeobjekt F1 verzweigt oder zum vorhergehenden Objekt "RETURN" zurückgegangen wird. Das Minuszeichen vor den Manövriercodes "weiter" und "neuer Auftrag" soll bedeuten, daß das letzte sichtbare Bedienobjekt von der Anzeige entfernt werden soll. Das Folgeobjekt F1 beinhaltet im Beispiel als ausführbares Bedienobjekt die Funktion zum Generieren eines neues Auftrags. Nach dem Start dieser Funktion erfolgt sofort ein Verzweigen von Objekt F2 zu Objekt 13 mit dem Manövriercode "NULL". Das Bedienobjekt 13 kann nun zum Beispiel weitere Dialogboxen aufbauen.

In Figur 4a sind die Visualisierungen eines Portalgreifers und die möglichen Dialogfunktionen bei adaptivem Verhalten dargestellt. In Abhängigkeit davon, ob sich gerade ein Werkstück W im Greifer befindet, sollen in der Bildschirmmaske M die Dialogfunktion "Laufzettel anzeigen" bzw. das Werkstück-Symbol erscheinen, Figur 4a oder verschwinden, Figur 4b. Die Maske M muß also abhängig von der Prozeßvariablen unterschiedlich generiert werden. Die Figur 4c beinhaltet das zugehörige Bediennetz. Ausgehend von einem Bedienobjektvorgänger 15 werden über die mit dem Inhalt einer Prozeßvariablen logisch UND-verknüpften "ok"-Manövriercodes die sichtbaren Bedienobjekte 20 mit Werkstück oder 30 ohne Werkstück erreicht. Erfolgt während der Aktivierung dieser Bedienobjekte eine Veränderung der Greiferbelegung, so wird durch das Manövrieren in das jeweils andere Objekt der zugehörige Dialog automatisch angepaßt. Über die Bedienobjekte 40 und F10 kann ein Nutzer den Laufzettel des Werkstücks W anzeigen und über die Objekte 50 und F20 das Einrichten des Portals bedienen.

Eine Grundvoraussetzung, um auf der Basis prozeßaktiver Bedienobjekte eine durchgängige Projektierung durchführen zu können, ist die Bereitstellung eines definierten Modells des Anwendungsprozesses. Für den Fall einer Zellensteuerung werden deshalb zwei Bibliotheken von Makroaufrufen und eine Liste von Prozeßvariablen geschaffen, die die Zellensteuerung nach außen vollständig abbilden. In der einen Bibliothek befinden sich alle Makros, die die Funktionalität der Zellensteuerung beeinflussen und in der anderen Bibliothek alle Makros, die die Prozeßvariablen beeinflussen. Funktionelle Änderungen in der Zellensteuerung erfordern eine Anpassung dieses Prozeßmodells. Bei der Projektierung der Benutzeroberfläche können diese Makros verwendet werden, um die gewünschten Aktionen der Steuerung auszuführen.

## Patentansprüche

1. Anordnung für die Bedienung einer rechnergesteuerten Fertigungseinrichtung mit einem Bediengerät, einem Modul für die Dialogbehandlung und einem Modul für die Prozeßvisualisierung,
dadurch gekennzeichnet,
daß für die Dialogbehandlung ein Modul für die Dialogsteuerung und ein Dialogpräsentationsmodul vorgesehen sind,
daß für die Prozeßvisualisierung ein Modul für die Manipulation von Prozeßvariablen und ein Präsentationsmodul für Prozeßvariable vorgesehen sind,
daß der Präsentationsmodul für Prozeßvariable und der Dialogpräsentationsmodul einen bediengeräteabhängigen Präsentationsmodul (1) und
daß der Modul für die Manipulation von Prozeßvariablen und der Modul für die Dialogsteuerung einen bediengeräteunabhängigen Modul für die Steuerung des Bedienablaufs (2) bilden und
daß der Präsentationsmodul (1) und der Modul für die Steuerung des Bedienablaufs (2) in Reihe zwischen dem Bediengerät (B) und einer Steuerung (S) der Fertigungseinrichtung liegen.

2. Anordnung nach Anspruch 1,
dadurch gekennzeichnet,
daß der Präsentationsmodul(1) mit einer Ressource zur Dialogpräsentation (3) und mit einer Ressource für die Präsentation von Prozeßvariablen (4) und der Modul für die Steuerung des Bedienablaufs mit einer Ressource für den Dialogablauf (5) und mit einer Ressource zur Manipulation der Prozeßvariablen (6) verbunden sind.

3. Anordnung nach Anspruch 1 oder 2,
dadurch gekennzeichnet,
daß für unterschiedliche Bediengeräte (B1, B2, ...Bn) ein einziger Modul für die Steuerung des Bedienablaufs (2) vorgesehen ist.

4. Anordnung nach einem der Ansprüche 1 bis 3,
dadurch gekennzeichnet,
daß der Modul für die Steuerung des Bedienablaufs (2) für die Bedienung der Fertigungseinrichtung mittels unterschiedlicher Bediengeräte mit jeweils einem Präsentationsmodul (P11, P21, ...Pn1) pro Bediengerät verbunden ist.

5. Anordnung nach einem der Ansprüche 1 bis 4,
dadurch gekennzeichnet,
daß als Bediengeräte Maschinen-Handterminals, Graphikterminals oder über ein Netzwerk anschließbare Bedienstationen vorgesehen sind.

6. Anordnung nach Anspruch 2,
dadurch gekennzeichnet,
daß eine Projektierung der Ressourcen (3, 4, 5, 6) mittels Texteditoren erfolgt.

7. Verwendung einer Anordnung nach einem der vorhergehenden Ansprüche bei Fertigungssystemen, Fertigungszellen oder numerisch gesteuerten Werkzeugmaschinen.
